# EUROPEAN PATENT APPLICATION

(11) **EP 1 609 746 A2**
(43) Date of publication of application: **28.12.2005**
(21) Application number: 05076650.0
(22) Date of filing: 17.05.2002
(51) Int. Cl.: B65G 47/52, B65G 15/60

(54) **Transfer conveyor**

(30) Priority: 18.05.2001 NL 1018103; 18.05.2001 NL 1018104
(62) Divisional of application: 02076922.0
(71) Applicant: Hachmang Beheer B.V., 2211 VA Noordwijkerhout (NL)
(72) Inventor: Hachmang, Hendrikus Cornelis Nicolaas, 2211 VA Noordvijkerhout (NL)
(74) Representative: Ferguson, Alexander

(57) **Abstract**

Transfer conveyor for transferring articles from a first conveyor to a second conveyor situated at a distance therefrom, the transfer conveyor comprising an endless conveyor belt which is turned around itself for an odd number of times, preferably once. Preferably, the conveyor belt has two indentical sides. In this way a change of direction and/or an increase of the conveying width can be achieved in a smooth manner.

## Description

The invention regards a transfer conveyor for transferring articles from a first conveyor to a second conveyor situated at a distance therefrom. The application furthermore relates to an assembly of such a transfer conveyor and said first and second conveyors. The application further relates to a belt for such a transfer conveyor.

By conveying articles by means of a conveyor system from the one process to another process, it may be desirable to change or shift the conveyance direction. A change in the angle of the conveyance direction is realised by having the second conveyor connect directly to the first conveyor -situated upstream of it-, for instance -in case of a 90 degrees transfer- at right angles to it. The articles are slowed down then, and will cluster when no particular measures are taken. The sudden change of conveyance direction is furthermore disadvantageous for the stability of the articles, for instance bottles. Here sometimes use is made of a tilted rectangular-triangular transfer plate, which with a cathenus connects to the first conveyor and with the hypotenuse connects to the second conveyor passing underneath it. The level difference present in these cases is objectionable.

It is also known to bridge a 90 degrees angle between two conveyors by means of an as such conically shaped belt, that is kept flat and wherein at the location of the turning ends cylindrical rolls have been arranged. Because the belt has a tendency to move to the outside a detaining provision is necessary.

In case of a group conveyance of the articles, it may also be desirable to change the width of the group. In case of a narrowing use is made of guides that bring the articles closer together. In case of a widening use is made of a stowing means, as a result of which the articles contact each other, which might be accompanied by a lot of noise, and are slowed down.

An object of the invention related to this is to improve on this.

From one aspect the invention to that end provides a transfer conveyor for transferring articles from a first conveyor to a second conveyor positioned at a distance from it, the transfer conveyor comprising an endless conveyor belt, which is turned around itself once.

With such an endless conveyor belt turned around itself once, the conveyance direction can be changed during continuous conveyance of the articles, without many braking forces, and a change in the width of the conveyance surface can easily be realised.

Such a conveyor belt will not have to be replaced as quick as a regular conveyor belt, because both sides alternatingly serve as conveyance surface.

Such a conveyor belt is furthermore easy to clean, because at a location along the surface of the belt at one time the one side and at another time the other side passes by. Both sides can therefore be cleaned from one side.

Preferably the transfer conveyor comprises first, second and third turning means for turning the direction of movement of the conveyor belt, considered in a vertical plane, the first and the second turning means being situated near the first and second conveyor belt, respectively. In this way the transfer conveyor can be kept compact as to height and always taut.

Preferably the conveyor belt has a longitudinal centre line oriented parallel to the longitudinal edges of the conveyor belt, the first and second turning means extending according to lines that are inclined with respect to the longitudinal centre line. Said inclines form the change of direction, which thus takes place in two steps.

Preferably the first and the second turning means are at a first and a second acute angle, respectively, to the longitudinal centre line, the first angle being larger than the second angle. Thus it is achieved that the width at the location of the second turning means is larger than at the location of the first turning means, so that a widening of a group of articles takes place gradually.

Alternatively the first and the second turning means are at first and a second acute angle, respectively, to the longitudinal centre line, the first angle being equal to the second angle. In that case there is no widening, but only a change of direction. The third turning means may extend according to a line parallel to the longitudinal centre line.

From another aspect according to the invention it may be provided that the first, second and third turning means extend according to lines that together define a triangle. As a result the stability of the conveyor belt is ensured in the horizontal plane.

For a smooth connection to either the first conveyor or the second conveyor it is preferred that either the first or the second turning means together with the conveyor belt form a thin or sharp edge. They can thus be brought immediately above the conveyance plane of those conveyors.

Preferably the transfer conveyor comprises means for driving the third turning means, so that the first and second turning means can be kept simple (passive) and thus small.

From a further aspect it is provided according to this invention that the conveyor belt is made from an initial belt having a rectangular or parallogram shape, two opposite sides of which -after turning around once-being connected to each other. Thus an endless conveyor belt according to the invention can be provided by a piece of conveyor belt of regular shape - and thus without loss of material- in a simple manner.

It is preferred here that the conveyor belt has a same surface on both sides, so that the grip on the articles will always be the same.

It is moreover preferred here that the conveyor belt has two identical sides, so that the wear and tear will be the same on both sides.

From a further aspect this invention provides an assembly of a transfer conveyor according to the invention and a first supply conveyor and a second discharge conveyor, the transfer conveyor with the first turning means connecting to the first conveyor and with the second turning means connecting to the second conveyor, the first and the second conveyor being at an angle to each other which deviates from 180 degrees.

The change of direction can also be realised with several transfer conveyors according to the invention. Here a second transfer conveyor can be positioned for enlarging the angle made by the first transfer conveyor of the conveyance direction to the supply direction of the first conveyor. In case of two transfer conveyors each having a change of direction of 45 degrees, a 90 degrees transfer can be realised smoothly.

Alternatively the second transfer conveyor can be positioned for reducing the angle made by the first transfer conveyor of the conveyance direction to the supply direction of the first conveyor. This can be used when the conveyance direction of the first and the second conveyors is the same, but does not coincide.

It can be easily achieved here that the transfer conveyor at the receiving end is wider than at the discharging end of the conveyor belt.

From a further aspect the invention provides a conveyor belt that is turned around itself an uneven number of times, preferably once.

The application moreover relates to a dispenser for dispensing articles, such as bulbs, to a next processing machine, such as a packing machine.

Such a machine is known from Dutch patent application 1007957. The known machine comprises a conveyor chain onto which circle-cylindrical holders have been attached. The holders have a bottom flap that is rotatable about a vertical axis for movement from a position that closes off the holder to a dispensing position. The machine is provided with a stationary bottom plate preventing the product from falling out of the holder after the flap has been turned open and before the point of dispensing has been reached.

At the location of the point of dispensing, the conveyor chain is diverted according to a circular path, as a result of which the holder undergoes a rotation at that location without translation while the chain continues to run. As a result dispensing can take place more accurately.

To improve the dispensing of the products from the holders it is known to urge a ram from above into the holders. This may be necessary when the product might be sticky due to clay residues (in case of bulbs). The ram is positioned vertically having a hydraulic or pneumatic cylinder for drive. This requires room in vertical direction, and in case of vertical travels may necessitate a larger travel of the chain.

It is an object of the application to improve on this.

From one aspect the application to that end provides a device for dispensing articles to a processing machine for it, such as a packing machine, comprising a conveyor with holders for the articles, travelling around in accordance with a conveyance track, a first station for dispensing the articles to the holders and a second station for dispensing the articles from the holders to the processing machine, the conveyor comprising a conveyor chain or the like and the holders being attached to the conveyor chain, the device further comprising an aid for driving the articles out of the holders at the location of the second station, which aid comprises a pusher formed by an elongate body which by means of drive means is moveable between a storage position having a small vertical size and a substantially vertical drive-out position having a vertically developed length.

Preferably the aid has been arranged within a horizontal course of the conveyor chain, so that the height of the conveyance track can remain limited.

Preferably the elongate body is a so-called cable caterpillar or drag chain. Such elongated elements may in stretched form transfer a pushing force and yet easily travel around in curves.

Preferably at the notched side the drag chain is provided with a tension belt attached to both ends of the drag chain. As a result a tensile stress can be exerted on the drag chain so that it remains straight. By tensioning the belt the buckle strength of the stretched part is increased, so that a possible transverse force exerted by the bulb to the lower end of the elongate body does not hamper a good drive-out action.

In an alternative embodiment the elongate body may preferably be rolled up in the storage position, so that also in horizontal direction little space is taken up.

The drive means preferably comprise a drive belt for engaging the elongate body for its rotation to either roll it up or to unroll it, thus making tightly rolling up possible.

Preferably use is made of an elongate body having an inherent tendency to take a hollow shape in cross-section, the hollow shape providing rigidity against bending outwards and buckling of the elongate body during engagement of the products is prevented.

Preferably the elongate body is steel band and preferably provided with a free drive-in end forming a thrust surface.

Preferably means are furthermore provided for scraping off the surface of the elongate body during its movement from the drive-out position to the storage position, so that clay residues and the like do not hinder the tightly rolling up.

Preferably the elongate body is rigid in longitudinal direction and bendable in transverse direction.

The machine known from Dutch Patent Application 1007958 for said provision has to travel around in a horizontal plane, which may be undesirable considering the space it takes up.

It is an object of the application to suggest an alternative, in which this problem is less of an issue.

From one aspect the application to that end provides a device for dispensing articles to a processing machine for it, such as a packing machine, comprising a conveyor with holders for the articles, travelling around in accordance with a conveyance track, a first station for dispensing the articles to the holders and a second station for dispensing the articles from the holders to the processing machine, the conveyor comprising a conveyor chain or the like and the holders being attached to the conveyor chain, the conveyor being provided with guiding rolls and with drive means for allowing the conveyor chain with the holders to travel around the guiding rolls, as well as with detaining means for keeping the holder still and in place during the dispensing of the articles from said holders under continuous drive, preferably at constant speed, of the conveyor chain, and the movement of at least one of the guiding rolls in the plane of travelling around. The wanted result is achieved here by a movement in the plane of travelling around, so that the space taken up can remain limited.

From another aspect the invention provides a device for dispensing articles to a processing machine for it, such as a packing machine, comprising a conveyor with holders for the articles, travelling around in accordance with a conveyance track, a number of processing stations, such as a first station for dispensing the articles to the holders and a second station for dispensing the articles from the holders to the processing machine, the conveyor comprising a conveyor chain or the like and the holders being attached to the conveyor chain, the conveyor being provided with guiding rolls and with drive means for allowing the conveyor chain with the holders to travel around the guiding rolls, as well as with detaining means for keeping each holder still, in place and in orientation, during presence on a processing station of said holder, under continued driving, preferably at constant speed, of the conveyor chain.

Preferably the detaining means are adapted for keeping the holder still in orientation during the dispensing of the articles from said holder. As a result the conveyance and guiding means can remain simple.

Preferably the second station is situated between two first guiding rolls, the detaining means comprising means for reciprocal moving the first guiding rolls commonly over a certain distance in the plane of travelling around, the length of the chain remaining unchanged.

Preferably the detaining means are adapted for simultaneously moving the first guiding rolls counter to the conveyance direction during dispensing the articles from the holders, and after dispensing in opposite direction.

Preferably the detaining means are adapted for moving the first guiding rolls counter to the conveyance direction at a speed that is half the conveyance speed. Furthermore it is preferred that the detaining means are adapted for moving the first guiding rolls in conveyance direction at a speed that is one and a half times the conveyance speed.

In a further embodiment the detaining means are adapted for movement of the first guiding rolls parallel to the direction of movement of the conveyor chain at the location of the second station.

In the known machine discussed above, the bottom flap turns away outside of the holder, as a result of which there are limitations for the suspension and the guiding of the holders as well as other parts of the machine.

A further object of the application is to improve on this.

From another aspect the application to that end provides a holder for articles for their conveyance between a first station for dispensing the articles to the holders and a second station for dispensing the articles from the holders to the processing machine, the holder comprising a tray having a reception opening and a discharge opening, as well as bottom means for downwardly closing off the discharge opening and supporting the articles, the bottom means being moveable between a retracted position, in which the discharge opening is free, and a closed conveyance position. The bottom means here remain within the profile of the holder so that the holder does not take up more space at that location.

Preferably the discharge opening is circular so that it fits on/suits a round access opening of a filler tube of for instance a form-fill-seal machine.

Preferably the bottom means are attached to the holder in a manner so as to be rotatable about a horizontal axis.

It is furthermore preferred that the bottom means are divided, particularly comprising two shells, that are rotatable about respective parallel axes.

In said circular discharge opening the shells preferably have a cross-section curved according to a same arc of a circle.

Preferably the holder is provided with operation means for having the bottom means moved, the operation means preferably comprising a lever, which is arranged there to be rotated by external means such as a stationary guide. The device itself can thus be kept simple.

Preferably a lever is present for each shell, the levers being situated on either side of the holder.

The holder may be provided with a partition, the space situated on the one side of said partition being limited by the shell operated by the one lever or similar means, and the shell situated at the other side of the partition by the other. The products can then be dispensed at different moments/locations. The partition can part the receiving space of the holder in accordance with the parting of the bottom means.

It is furthermore preferred that the bottom means are movable at the inside of the holder.

From another aspect the application provides a device for dispensing articles to a processing machine for it, such as a packing machine, comprising a frame having a conveyor with holders for the articles travelling around in accordance with a conveyance track, a first station for dispensing the articles to the holders and a second station for dispensing the articles from the holders to the processing machine, the conveyor comprising a conveyor chain or the like and the holders being attached to the conveyor chain, the conveyor being provided with guiding rolls and with drive means for letting the conveyor chain with holders travel around the guiding rolls, as well as with detaining means for keeping the holder still, in place and in orientation, during dispensing the articles to said holder under continuous drive of the conveyor chain, furthermore provided with means for adjusting the level of the first station with respect to the frame, at least the secondary guiding roll being attached in the frame so as to be movable in the plane of travelling around, and means being provided for moving the secondary guiding roll in dependence on the movement of the first station. In this way the first station can be brought at a wanted level, without the chain length having to be changed. The first station can then easily be kept near the location of dispensing of the products to the holders, as a result of which damage is prevented and the dispensing process is promoted.

Preferably the secondary guiding roll is adjustable in horizontal direction.

Preferably the holders are adapted for conveying tubers, particularly dahlia tubers.

The inventions will be elucidated on the basis of a number of exemplary embodiments shown in the attached drawings, in which:
Figure 1 is a schematic side view of a machine for supplying articles, particularly tubers, to a packing machine (not shown);
Figures 2A-C show a side view, an end view and a top view, respectively, of a holder for use in the machine of figure 1;
Figure 3 shows a cross-section of an aid for pushing the products accommodated in the holders out of the holders of the machine of figure 1 during dispensing the products;
Figure 4 shows a cross-section of an alternative aid for pushing the products accommodated in the holders out of the holders of the machine of figure 1 during dispensing the products;
Figure 5 shows a schematic top view of a conveyance assembly according to the invention;
Figures 5A, 5B and 5C, respectively show partial cross-sections according to arrows VA, VB and VC in figure 5;
Figure 6 shows a second exemplary embodiment of a conveyance assembly according to the invention, in schematic top view; and
Figure 7 shows a schematic top view of another exemplary embodiment of a conveyor belt according to the invention.

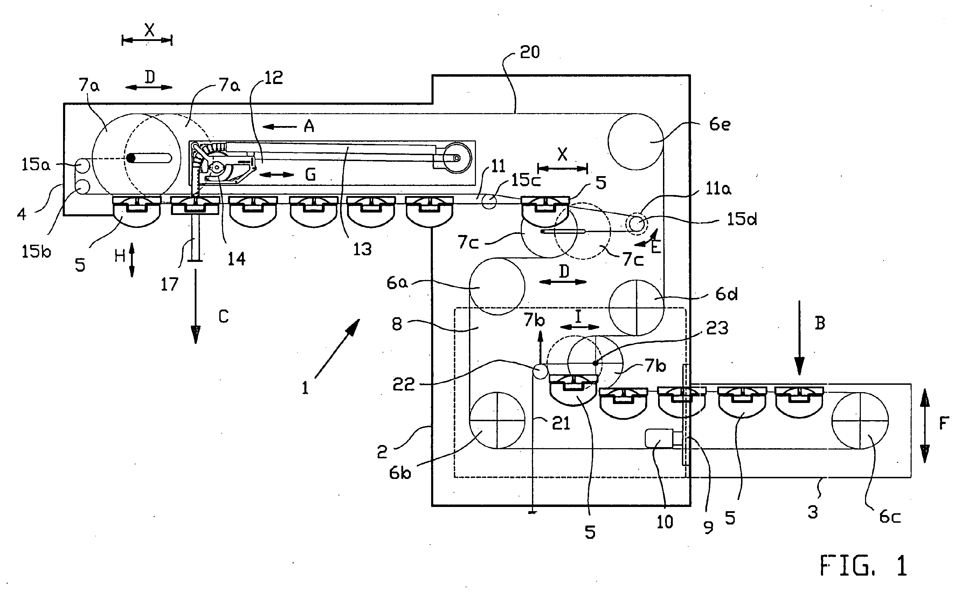

In figure 1 the machine 1 is shown, having a vertical main frame 2, a filler frame 3 extending horizontally from it and at its other side, an also horizontally extending dispenser frame 4.

Through the frames 2, 3 and 4, in a vertical plane, a conveyor chain or conveyor belt 20 runs, driven in direction A with drive means that are not further shown. The chain 20 here runs around a number of guiding rolls 6a,b,c,d,e and 7a,b,c, that may or may not be driven. Product holders 5 that are optionally supported in guides that are not further shown, are attached to the chain 20.

Above the filler frame 3 a supply location for supply in the direction B of articles, such as tubers, for instance dahlia tubers, to the holders 5 is positioned.

Below the dispenser frame 4 there is a filler chute 17 of a packing machine that is not further shown, such as a form-fill-seal machine, at which location the products can be dispensed in the direction C from a holder 5, which, as will be discussed, has a bottom that can be turned open.

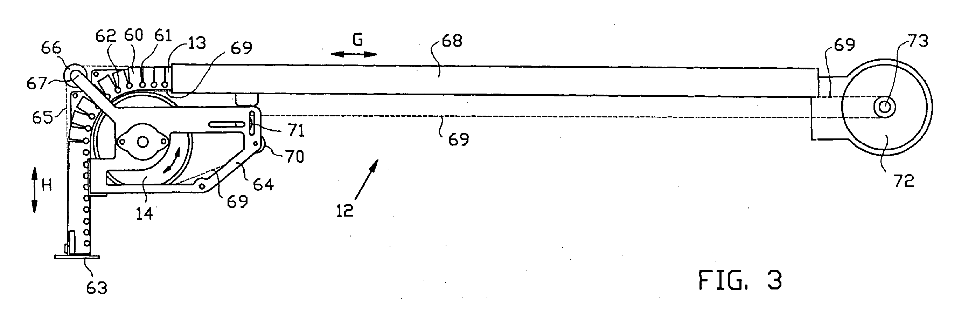

Just above the thus formed discharge station in the dispenser frame 4, within the tracks situated above each other of the chain 20, there is a casing 12 in which an elongate pusher 13 is accommodated. Said pusher 13 is moveable over driver/supporting roll 14 in the direction G, and will change from a horizontal direction over the roll 14 into a vertical direction H. This will be further gone into in the discussion of figure 3.

The rolls 6b, 7b and 6d have been arranged on an auxiliary frame 8, which is a permanent unit with the filler frame 3, in which the roll 6c has been attached. The combined frame 3, 8 is moveable up and down in the direction F, and to that end provided with a vertical rack 9, which is in engagement with a pinion which is driven by servomotor 10.

It is furthermore indicated that the rolls 7a and 7c are moveable in horizontal direction within horizontal guides shown. Shown are the ultimate positions. The rolls 7a and 7c are connected to each other with their axles by means of auxiliary chain 11, which is guided around stationary positioned guiding rolls 15a, 15b and 15c, as well as around roll 15d, which is driven by motor 11a. The motor 11a is reversible in order to drive the drive roll 15d in opposite directions E, and thus reciprocally moving the chain 11, and therewith the rolls 7a and 7c either to the left or to the right.

It is noted that the axles of the rolls 7a and 7c can also be connected to each other by means of a rigid connection, such as a coupling bar, which in a suitable manner is reciprocally driven in order to achieve the desired displacement of the rolls 7a and 7c.

The rolls 7a and 7c form a mechanism with which it can be achieved that during dispensing the products from the holder 5 at the location of the dispensing station the holder 5 is kept still without the chain 20 having to be driven at another speed or having to be stopped.

To that end at the moment of dispensing the motor 11 a is operated, as a result of which the drive roll 15d moves to the right and the chain 11 exerts a force directed to the left on the axle of the roll 7a, so that it is displaced from the dashed position over a distance X in the direction D to the left. The motor 11a is operated such that the displacement of the roll 7a takes place at a speed that is half the speed of the chain 20. Due to the tension in the chain 20 the roll 7c is also urged in the direction D to the left, over a distance which is also X. The speed of movement of the roll 7c is equal to the one of the roll 7a.

With the speed of the movement to the left of the roll 7a of half a chain speed, it is achieved that the holder 5 at the location of the dispenser station is at a standstill. The dispensing can then take place completely under control, the products being able to fall exactly vertically into the packing machine. The motor 11a is operated such that the drive of the roll 15d to the left is one and a half times the speed of the chain 20. Here the roll 7c is pulled from the position shown by a drawn line in the direction D to the right, in which due to the tension in the chain 20, the roll 7a is also urged from the drawn line position in the direction D to the right. Finally both rolls 7a and 7c take the position shown by means of striped lines.

Depending on by what means the products are supplied with and are transferred to the holders 5 at the location of the filler station near the filler frame 3, and depending on the degree of fragility of the products, it may be desirable to bring the filler frame 3 at a certain level for a certain charge.

To that end by means of servomotor 10 and pinion driven by it, the auxiliary frame 8 and the filler frame 3 attached to it are moved up or down, whatever is desired, via rack 9. However the vertical path of the chain 20 is changed here. In the situation shown in figure 1 the filler frame 3 is placed in a low position. In case of upward displacement of the frame 8/3 a length of chain will be left over. In order to prevent that the chain 20 will slacken, the roll 7b is also positioned so as to be horizontally moveable in the direction I. Simultaneously the roll 7a will be displaced in the direction J over a distance s. The means for displacing the roll 7b can be simple, and for instance a belt 21, which travels around the guiding roll 22 that is attached to the auxiliary frame 8 and with the one end is attached to a fixed point of the frame 1 and with the other end is connected to the axle 23 of the roll 7b.

When the motor 10 is operated, the rack 9 will be vertically displaced as a result of the engagement of the pinion in the tack 9. In this way the frame assembly 3/8 is also displaced vertically in the direction F. With the frame assembly 3/8 the rolls 6b, 6c, 6d and 7b as well as guide roll 22 move along. When the displacement is upward, the horizontal part of the belt 21 will have to be shortened about an extension of its vertical part, so that axle 23 of the roll 7b has to move to the left in the direction I. As a result more length is needed there for the chain 20, with which the shortening of the chain as a result of the approach in vertical direction of the rolls 6a and 6b on the one hand and the rolls 6d and 6e on the other hand is compensated. Thus the chain 20 remains at tension.

In case of downward movement in the direction F, the downwardly moving rolls 6b and 6d will want to increase the travel of the chain 20, which is made possible by the movement possibility of the roll 7b in the direction I to the left, urged by the tension in the chain 20.

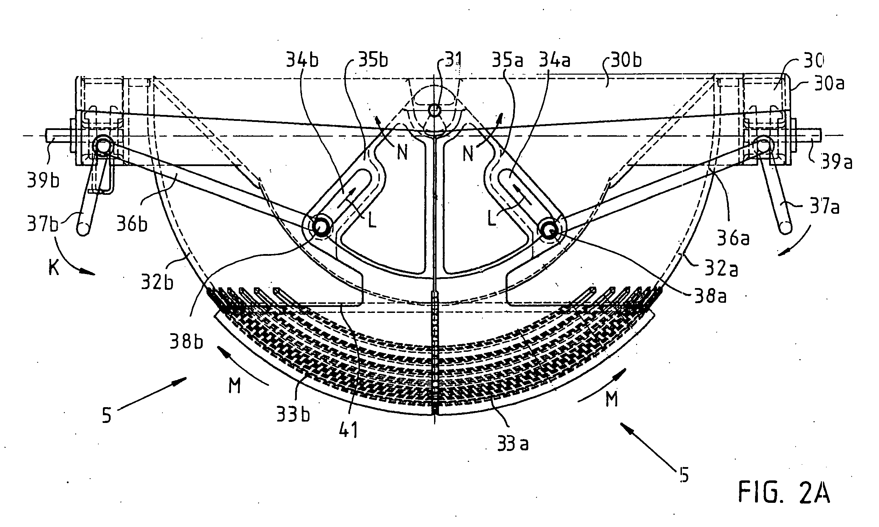

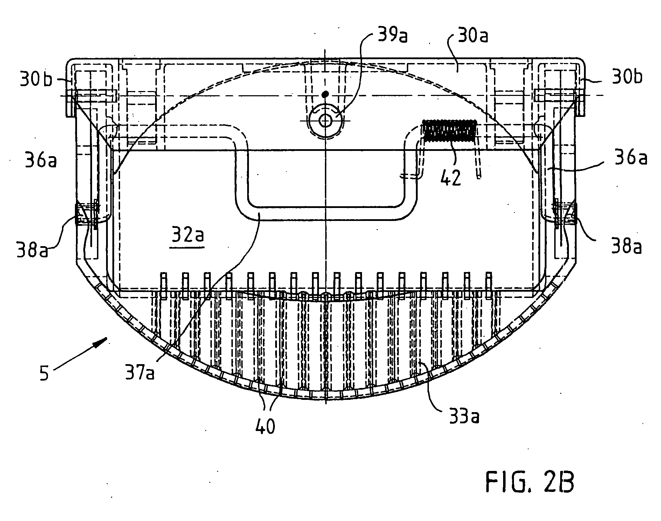

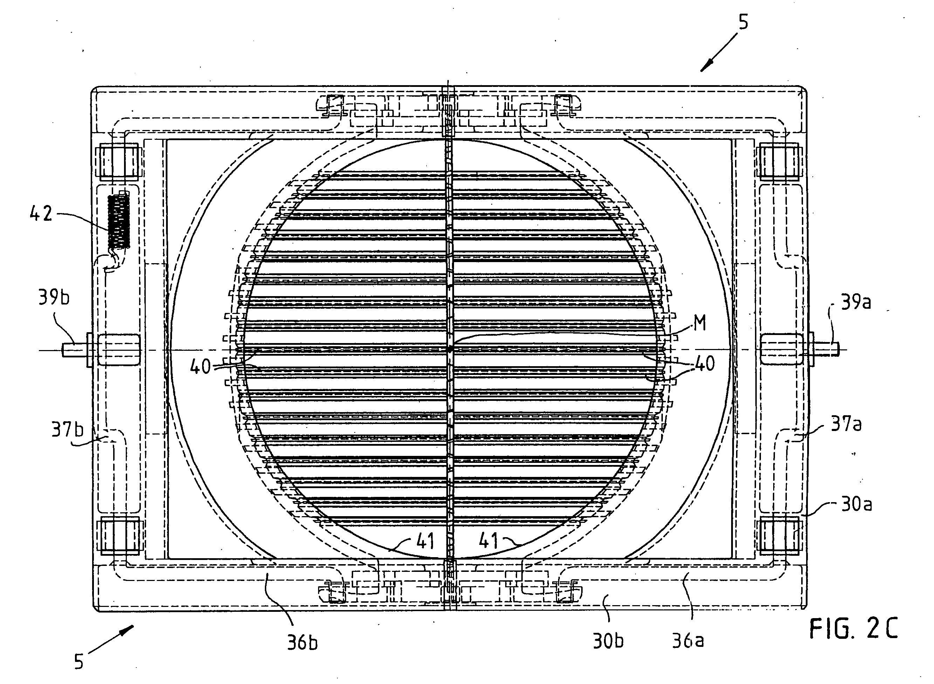

The holder 5 shown in the figures 2A-C is tray-shaped and may be manufactured of synthetic material. The holder 5 comprises frame 30, having short sides 30a and long sides 30b. They define a rectangular shape. As can be seen in figure 2a two shells 32a, 32b extend downward from the frame 30, which shells have centre of curvature M that is situated in the middle between hinges 31, on both longitudinal sides 30b. At their lower side both shells 32a, 32b define a circular vertically oriented hole 41. This hole 41 is closed off by two bottom members 33a, 33b which in longitudinal section in the middle have the same centre of curvature M, and as can be seen in figures 2B and 2C are more or less spherical.

At their upper edge both bottom members 33a, 33b have two arms 35a, 35b formed as a unity with it, which arms extend on either side near the longitudinal edges 30b, in order to be hingingly attached to the longitudinal edges 30b at the location of the hinge 31.

The arms 35a, 35b have been provided with longitudinal slits 34a, 34b which are also oriented in accordance with the radius about the hinge 31. In these longitudinal holes 34a, 34b transverse pin 38a, 38b has been accommodated, attached to lever arms 36a, 36b which also extend on either side of the holder 5, and at their other end (see figure 2C) run transversely under the transverse edges 30a, 30b to a bracket 37a, 37b (see figure 2B) which serves for engagement for operating the holder 5.

Both lever structures 36, 37 are at spring tension of a spring 42, only one of which is shown in figures 2A, 2C. By means of this spring 42 the pins 38a, 38b are downwardly pre-tensioned.

Finally it is noted that at the transverse edges 30a pins 39a, 39b have been provided, with which the holder 5 can be connected to conveyor chains positioned on either side of the holder 5.

Optionally the holder 5 can be provided with a vertical middle partition, in order to simultaneously transfer several products to a packing machine. It is also possible to use several dispenser stations, the bottom member 33a being turned away at the one station first, and the bottom member 33b in the next dispenser station.

For opening the bottom members 33a, 33b permanent guides have been provided in the machine 1, which guides are positioned to come into engagement with the bracket 37a, 37b and to pivot it in the direction K when dispensing is wanted. As a result the pins 38a, 38b will move in the direction L in the slit 34a, 34b and as a result cause a movement of the arms 35a, 35b in the direction N, due to which the bottom members 33a, 33b rotate in the direction M. When the bottom members 33a, 33b are turned open completely, their lower edges almost coincide with the opening 41 and a circular discharge opening is obtained. This is advantageous when use is made of a circle-cylindrical chute or filler tube for the packing machine.

The pusher mechanism 12 shown in figures 1 and 3 with push belt 13 takes up little space in the vertical sense. The pusher belt 13 can be compared to a generally known drag chain, formed by a series of rigid synthetic blocks 60, which are formed as a unity with each other and are separated from each other by means of cuts 61, but connected to each other by means of internal hinges 62, as can be seen in figure 3. The cuts 61 make it possible that the push belt 13 is able to follow a curvature, but in the stretched tracks is able to absorb a compression force. In the horizontal part the push belt 13 is supported in casing 68. The push belt 13 is driven by roll 14, in opposite directions. The roll 14 itself is bearing mounted in a rotatable manner in permanent frame 64, in which a guiding roll 70 and a tension roll 71 are also bearing mounted. A drive belt 69 is guided about the rolls, which belt at the other end is in driving engagement with a drive roll 73, which is driven by a motor 72 which is also stationary. As can be seen in figure 3 the belt runs from the drive roll 73 to the left, turns around tension roll 71, further around guiding roll 70, and for its drive, around support/drive roll 14, and then between the bottom of channel 68 and the bottom side of the push belt 13, to the right again to the drive roll 73.

At the other side a stretch and rigidity belt 65 is arranged on the push belt 13, and such that the belt 65 is attached at both ends at the ends of the push belt 13. In between the belt 65 is free. The belt 65 serves to stretch the push belt 13 and to keep it at compression pre-tension, so that it obtains an increased rigidity, and in the vertical part is purely stretched. By means of outrigger 67 and guide roll 66 bearing mounted at its end, the belt 65 is kept free from the push belt 13 in the turning area of the push belt 13, in order to prevent that the belt 65 gets jammed in the slits 61 when they are closing.

At the lower end the push belt 13 is provided with a pusher or ram 63, which is circle-cylindrical, fitting in the circular discharge opening of the holders 5.

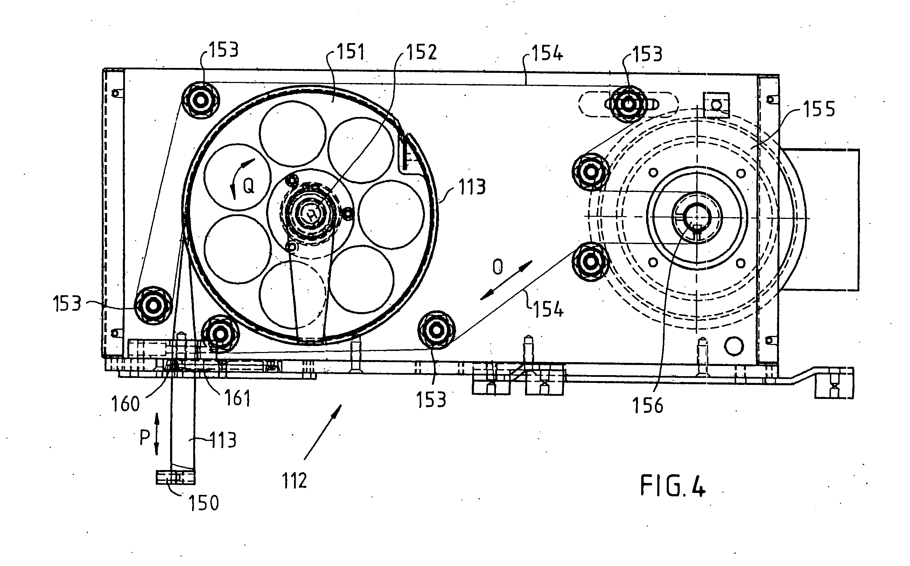

In an alternative embodiment, shown in figure 4, there is question of a casing 112, which can be placed above the dispenser station in the machine 1. The casing 112 is provided with a drum 151, which is rotatable about an axle 152. On the drum 151 a roll belt 113 is wound, which corresponds to the belt of a so-called measuring tape. At the end of the belt 113 a thruster 150 is provided, with which the products can be pushed out of the holder 5, should they get stuck in there or something like that. In the free position the belt 113 will have a U-shaped cross-section and be buckle resistant, yet it can be rolled up flat on the drum 151. As a result the space it takes up in horizontal direction is also limited.

For keeping the belt 113 flat against the drum and driving the drum 151 in order to discharge or haul in the belt 113, a drive belt 154 has been provided which runs around a number of rolls 153 and is driven by the driving shaft 156 of the servomotor 155. By driving the belt 154 in the direction O the drum 151 will be rotated in the direction Q and thus the push belt 113 will be vertically pushed down or hauled up in the direction P.

Guides 160 and 161 have been provided for orienting the belt 113 and scraping off the dirt on it when hauling in the belt 113.

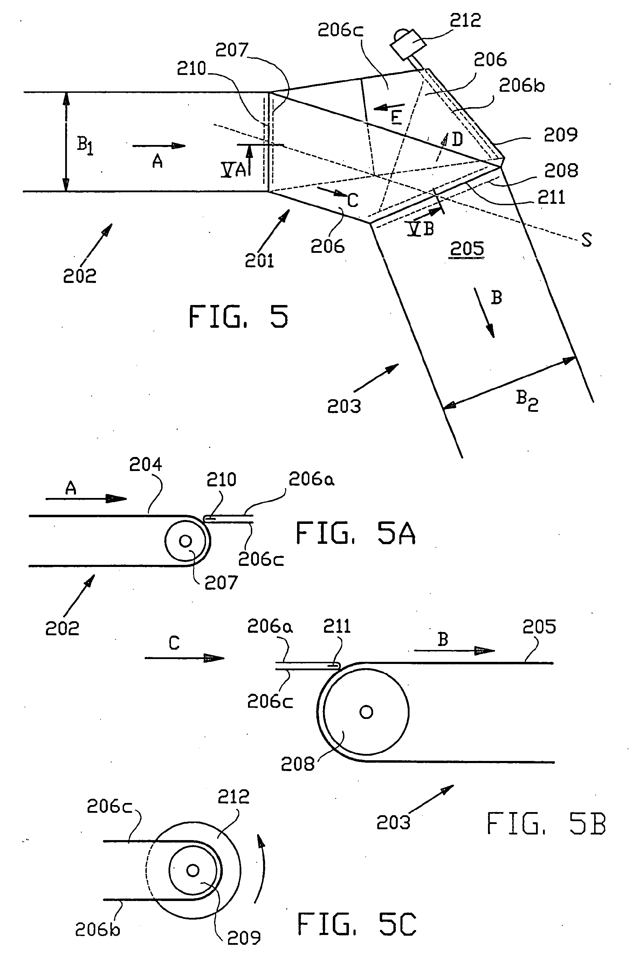

In figure 5 the transfer conveyor 201 is linked between a first conveyor 202 and a second conveyor 203, which provide a conveyance surface 204 and 205, respectively, to products that are not further shown, which conveyance surfaces can be formed by a conveyor belt or a chain or the like. The conveyance surface 204 has a width of B1 and the conveyance surface 205 has a larger width of B2. The first conveyor 202 conveys in the direction A, and the second conveyor 203 conveys in the direction B, which is at an acute angle to the conveyance direction A.

By means of transfer conveyor 201 of figure 5 not only the angle change is carried out, but also a widening of the conveyance track from B1 to B2.

To that end the transfer conveyor comprises a conveyor belt 206 that is turned around itself once, which belt is turned along three edges, so that three path tracks van be distinguished, namely path track 206a, in the direction C, a path track 206b in the direction D, and a path track 206c in the direction E. At the location of the reversal of the direction E to the direction C, in which the path track 206 is on top, the turning is rather sharp about a fixed, thin plate edge 210. As can be seen in figure 5A it is achieved here that the turning at that location can extend to over the portion of the conveyance surface 204 moving downwards around conveyor roll 207 of the conveyor 202, so that a smooth connection in the conveyance surface is obtained.

A same arrangement has been realised at the downstream end of the path track 206a, as shown in figure 5B. There the transition of path track 206a to path track 206b also takes place via a thin edge 211 of a stationary plate that is not further shown.

In figure 5 the relative location of the path tracks 206a, 206b and 206c is such that the path track 206a lies above, as actual conveyance surface, that beneath it the path track 206c is situated and beneath that the path track 206b. The transition of path track 206b into 206c, the direction turn from D to E then taking place, takes place via a drive roll 209, which is driven by means of a motor 212. This is schematically shown in figure 5C. Adjusting means can be provided for tensioning the drive roll 209 with respect to the -fixed- edges 210 and 211.

The path track 206a has a centre line S, in order to indicate the middle between both its side edges.

It will be noted that in the path track 206a the same side of the conveyor belt 206 is not always offered as conveyance surface. Due to the single turning in the conveyance belt 206, the ends of the conveyor belt at the location of seam 214 being attached to each other, a change always takes place at the side of the conveyor belt 206 that passes by on top in the path track 206a.

When the belt 206 travels in an inclined manner around the drive roll 209, belt material will also displace axially in case of travel from the incoming point the outgoing point of the movement around the roll, friction may then occur depending on the materials chosen. If necessary for promotion of the travel of the roll, the roll may be provided with surface parts, which during rotation of the roll axially move along (freely) with the belt in the aforementioned axial displacement, and in the track between the outgoing and the incoming of the belt move back again to the initial position, for instance under the influence of spring action.

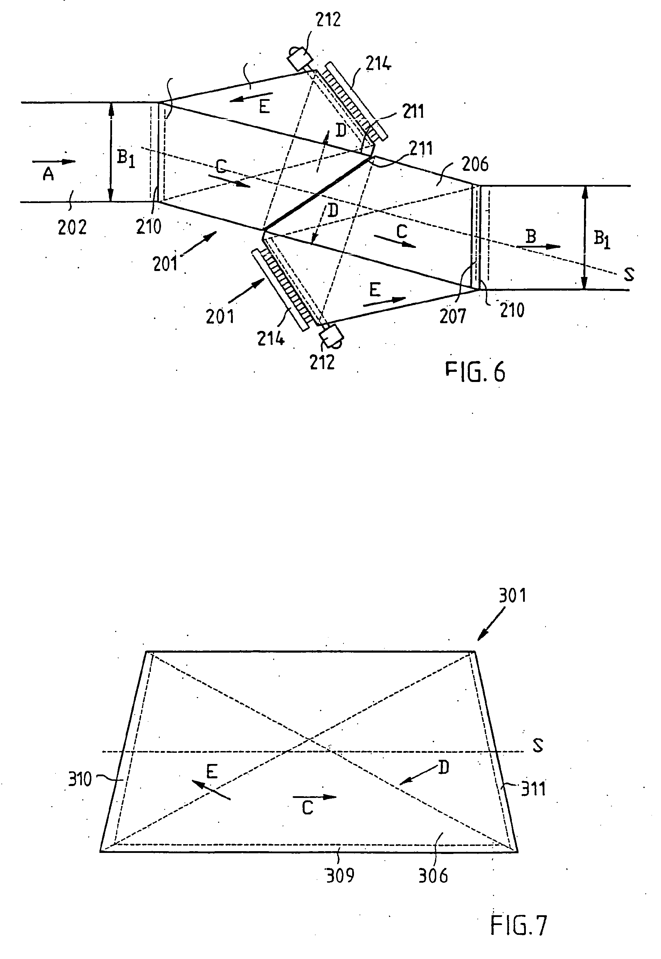

In figure 6 it is shown how, by means of two serial-linked transfer conveyors 201, the conveyance direction is maintained, as well as the conveyance width B, though the conveyance direction having been offset. There is more or less question here of a rotation symmetrical arrangement of both transfer conveyors 201, the conveyance directions in both transfer conveyors 201 however being opposite each other, that means that in the first transfer conveyor the conveyance direction C runs from the turning edge 210 to the turning edge 211, and that in transfer conveyor 201 positioned downstream of it the conveyance direction C runs from the turning edge 211 to the turning edge 210.

In figure 7 an alternative embodiment of the transfer conveyor according to the invention is shown, in which the turning at the location of 309 is parallel to the centre line S of the path track 306a which conveys in the direction C. It is striking here that the rotation centre line of the drive 309 is parallel to the effective conveyance direction C to be achieved.

The turning edges 310 and 311 are at an equal angle though in sign an opposite angle to the centre line S.

The conveyor belts 206 and 306 have identical layers on both sides to serve as conveyance surface, having the same surface structure, so that it does not matter which side at some time or other serves as conveyance surface. Cleaning the conveyor belts according to the invention can then also easily take place, such as for instance with cleaning sprinklers and brushes 215, schematically shown in figure 6.

## Claims

1. Transfer conveyor for transferring articles from a first conveyor to a second conveyor situated at a distance therefrom, the transfer conveyor comprising an endless conveyor belt which is turned around itself once.

2. Conveyor according to claim 1, comprising first, second and third turning means for turning the direction of movement of the conveyor belt, considered in a vertical plane, the first and the second turning means being situated near the first and second conveyor belt, respectively, the conveyor belt preferably having a longitudinal centre line oriented parallel to the longitudinal edges of the conveyor belt, and the first and second turning means extending according to lines that are inclined with respect to the longitudinal centre line.

3. Conveyor according to claim 2, the first and the second turning means being at a first and a second acute angle, respectively, to the longitudinal centre line, the first angle being larger than the second angle.

4. Conveyor according to claim 2, the first and the second turning means being at first and a second acute angle, respectively, to the longitudinal centre line, the first angle being equal to the second angle.

5. Conveyor according to claim 2, the third turning means extending according to a line parallel to the longitudinal centre line.

6. Conveyor according to any one of the claims 2-5, the first, second and third turning means extending according to lines that together define a triangle.

7. Conveyor according to any one of the claims 2-6, the first turning means together with the conveyor belt forming a thin or sharp edge.

8. Conveyor according to any one of the claims 2-7, the second turning means together with the conveyor belt forming a thin or sharp edge.

9. Conveyor according to any one of the claims 2-8, comprising means for driving the third turning means.

10. Conveyor according to any one of the preceding claims, the conveyor belt being made from an initial belt having a rectangular or parallogram shape, two opposite sides of which -after turning around once- being connected to each other.

11. Conveyor according to any one of the preceding claims, the conveyor belt having a same surface on both sides.

12. Conveyor according to any one of the preceding claims, the conveyor belt having two identical sides.

13. Assembly of a transfer conveyor according to any one of the claims 2-9 and a first supply conveyor and a second discharge conveyor, the transfer conveyor with the first turning means connecting to the first conveyor and with the second turning means connecting to the second conveyor, the first and the second conveyor being at an angle to each other which deviates from 180 degrees.

14. Assembly of a first supply conveyor and a second discharge conveyor, two or more transfer conveyors according to any one of the claims 1-12 being placed between said supply and discharge conveyors.

15. Assembly according to claim 14, the second transfer conveyor being positioned for enlarging the angle made by the first transfer conveyor of the conveyance direction to the supply direction of the first conveyor, the second conveyor preferably having a discharge direction which is at an angle of approximately 90 degrees to the supply direction.

16. Assembly according to claim 14, the second transfer conveyor being positioned for reducing the angle made by the first transfer conveyor of the conveyance direction to the supply direction of the first conveyor, the second conveyor preferably having a discharge direction which is almost parallel to the supply direction.

17. Assembly according to any one of the claims 13-16, the transfer conveyor at the receiving end being wider than at the discharging end of the conveyor belt.

18. Conveyor belt that is turned around itself an uneven number of times, preferably once, the conveyor belt preferably being made of an initial belt having a rectangular or parallogram-like shape, two opposite sides of which being connected to each other and/or the conveyor belt having a same surface on both sides, and/or the conveyor belt having two identical sides.
